# EUROPEAN PATENT SPECIFICATION

(11) **EP 4 640 485 B1**
(45) Date of publication and mention of the grant of the patent: **13.05.2026**
(21) Application number: 24200845.6
(22) Date of filing: 17.09.2024
(51) Int. Cl.: B60N 2/30

(54) **A MOTOR VEHICLE**
KRAFTFAHRZEUG
VÉHICULE À MOTEUR

(30) Priority: 25.04.2024 TR 202404966
(43) Date of publication of application: 29.10.2025
(73) Proprietor: Ford Otomotiv Sanayi Anonim Sirketi, 34885 Sancaktepe/Istanbul (TR)
(72) Inventor: METIN, Ercan, 34885 ISTANBUL (TR); AKYILDIZ, Cem, 34885 ISTANBUL (TR); DINC, Serkan, 34885 ISTANBUL (TR); KOR, Eren, 34885 ISTANBUL (TR); BECER, Goksan, 34885 ISTANBUL (TR); AGMAL, Ferkan, 34885 ISTANBUL (TR); ERSOY, Rustem, 34885 ISTANBUL (TR)
(74) Representative: Dericioglu, E. Korhan

(56) References cited:
- FR-A1- 2 923 188
- US-B2- 8 690 217

## Description

### Technical Field

The present invention relates to motor vehicles having a foldable rear seat and a bulkhead between the rear seat and a load area.

### Prior Art

Motor vehicles such as automobiles, jeeps and light commercial vehicles include at least one body, at least one movement system (engines, wheels, axles and other power transmission elements, steering etc.) and at least one inner compartment in the body. Said inner compartment creates a closed volume for carrying different loads along with the driver and passengers. Said inner compartment generally comprises at least one front seat, at least one rear seat located behind the front seat and a luggage-like load area located behind the rear seat. As required by safety standards, the inner compartment further comprises at least one bulkhead located between the rear seat and the load area. Said bulkhead is connected to the inner compartment's floor from at least one side thereof and to the inner compartment's ceiling from at least another side thereof. Here, especially during the movement of the vehicle, the bulkhead prevents the loads located in the load area from reaching the passengers in the rear seat and thus harming the passengers and the driver. Thus, vehicle safety is enhanced. US 8 690 217 discloses a motor vehicle with a foldable seat.

In such vehicles, the rear seats can be folded to the front in order to increase the volume of the load area in line with the need. Thus, loads of higher amount and/or longer structure can be located in the load area. In such applications, since the rear seat folds and approaches the front seat, the bulkhead located between the rear seat and the load area must also be brought forward. However, since said bulkhead is connected to the connection points located in the ceiling and floor of the inner compartment by means of fasteners, there must be more than one connection point at different positions in the ceiling and floor in order for the bulkhead to be fixed in a position close to the front. This, in turn, increases the manufacturing cost of the vehicle, as well as requiring the bulkhead to be separated from the ceiling and floor when a connection change is required, making the process inconvenient for users.

### Brief Description of Invention

A motor vehicle is disclosed in the present invention. Said motor vehicle comprises at least one body; at least one inner compartment having at least one ceiling and at least one floor in the body; at least one movement system located in the body; at least one front seat located in the inner compartment; at least one rear seat, located behind said front seat in the inner compartment and having at least one open and at least one folded position; at least one locking element located in said rear seat, connected to at least one first connection element located in said floor when the rear seat is in the open position, enabling the rear seat to be folded when separated from said first connection element; at least one load area located behind said rear seat in the inner compartment; at least one bulkhead located between the load area and the rear seat, suitable for being connected to said ceiling from at least one side thereof and to the floor from at least another side thereof; at least one second connection element located in said bulkhead, and suitable for being connected to said locking element when said rear seat is in the folded position.

In the motor vehicle developed with the present invention, the volume of the load area behind the rear seat can be increased by moving the rear seat to the folded position. In this way, if the rear seat is brought to the folded position, the bulkhead separating the rear seat and the load area is disconnected from the floor and said bulkhead is connected to the locking element in the rear seat. Thus, the position of the bulkhead can be changed in a practical and reliable manner according to the condition of the rear seat.

### Object of Invention

It is an object of the present invention to develop a motor vehicle having a foldable rear seat and a bulkhead between the rear seat and a load area.

Another object of the present invention is to develop a motor vehicle in which the position of the bulkhead can be easily changed if the rear seat is folded.

A further object of the present invention is to develop a motor vehicle which has a low manufacturing cost and is practical and reliable to use.

### Description of Figures

Illustrative embodiments of a motor vehicle according to the present invention are shown in the accompanying figures, among which
Figure 1 is a side view of a motor vehicle according to the present invention in which the inner compartment thereof is illustrated.
Figure 2 is a front view of a bulkhead of a motor vehicle according to the present invention.
Figure 3 is a side view of an unfolded state of the rear seat of the motor vehicle according to the present invention.
Figure 4 is a side cross-sectional view of a connection detail in the unfolded state of the rear seat of the motor vehicle according to the present invention.
Figure 5 is a side view of a folded state of the rear seat of the motor vehicle according to the present invention.
Figure 6 is a side cross-sectional view of a connection detail of the rear seat of the motor vehicle according to the present invention in a folded state thereof.
Figure 7 is a side view of a folded state of the rear seat of the motor vehicle in an alternative embodiment.

The parts in the figures are individually designated and referenced as following.

| | |
|---|---|
| Motor vehicle | (A) |
| Body | (G) |
| Inner compartment | (1) |
| Ceiling | (1a) |
| Floor | (1b) |
| First coupling element | (1c) |
| Connection slot | (1d) |
| Front seat | (2) |
| Rear seat | (3) |
| Sitting part | (3a) |
| Backing part | (3b) |
| Connection part | (3c) |
| Locking element | (3d) |
| Lock slot | (3e) |
| Lock bolt | (3f) |
| Movable connection element | (3g) |
| Load area | (4) |
| Bulkhead | (5) |
| First panel part | (5a) |
| Second panel part | (5b) |
| Connection part | (5c) |
| Second connection element | (5d) |
| First side bar | (5e) |
| Second side bar | (5f) |
| Bending part | (5g) |
| Ceiling connection element | (6) |
| Floor connection element | (7) |

### Description of Invention

Motor vehicles used for the transportation of people, pets and cargo include at least one body, at least one movement system and at least one inner compartment in which people, pets and cargo are located. Said inner compartment may comprise seats on which passengers, drivers and pets can sit and at least one load area for storing cargo. At least one bulkhead is located between the load area and the seats so that the loads located in the load area do not harm the passengers and the driver. Here, a part of said seats can be folded in order to increase the volume of the load area. In this case, it is also necessary to change the position of said bulkhead. For this reason, a motor vehicle has been developed with the present invention, including a bulkhead with a position that can be adjusted in a practical and reliable manner when the seat is folded.

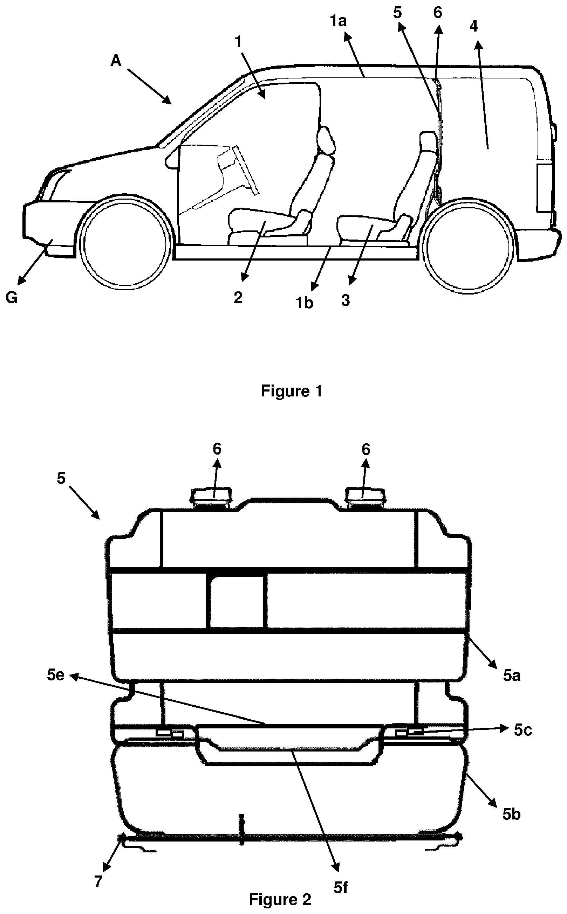

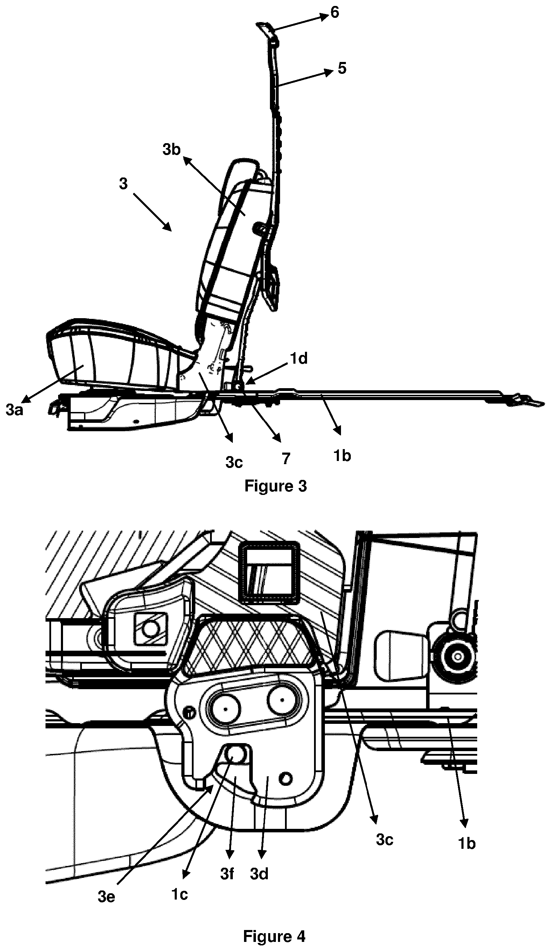

The motor vehicle (A) developed with the present invention and shown in Figures 1-7 comprises at least one body (G); at least one inner compartment (1) in the body (G), having at least one ceiling (1a) and at least one floor (1b); at least one movement system (not shown) located in the body (G); at least one front seat (2) located in the inner compartment (1); at least one rear seat (3) located behind said front seat (2) in the inner compartment (1), having at least one open (unfolded) and at least one folded position; at least one locking element (3d) located in said rear seat (3), connected to at least one first connection element (1c), preferably in the form of a bar, located in said floor (1b) when the rear seat (3) is in the open position, enabling the rear seat (3) to be folded when separated from said first connection element (1c); at least one load area (4) located behind said rear seat (3) in the inner compartment (1); at least one bulkhead (5) located between the load area (4) and the rear seat (3), suitable for being connected to said ceiling (1a) from at least one side thereof and to the floor (1b) from at least another side thereof; at least one second connection element (5d), preferably with a bar structure, located in said bulkhead (5), suitable for being connected to said locking element (3d) when the rear seat (3) is in the folded position.

The motor vehicle (A) described in an exemplary embodiment of the present invention is in the form of a light commercial vehicle. Here, the respective driver and passengers can be transported by means of the motor vehicle (A), as well as different loads for commercial purposes can be transported in the load area (4). Here, in the normal use of the motor vehicle (A), said rear seat (3) is in an open position, in which a locking element (3d) located in the rear seat (3) is connected (locked) to a first connection element (1c) located in the ceiling (1b). In this position, especially due to the forces created on the rear seat (3) during the movement of the motor vehicle (A), the rear seat (3) is prevented from assuming the folded position as a result of moving by itself. Also in this position, the bulkhead (5) is located between the rear seat (3) and the load area (4) so as to be connected to the ceiling (1b) from a lower part thereof and to the ceiling (1a) from an upper part thereof. Thus, the loads in the load area (4) are prevented from moving forward, thereby reaching and damaging the seats and the passengers and the driver. According to the amount and size of loads to be carried in the load area (4), the volume of the load area (4) can be increased by folding said rear seat (3). For this folding process, first the locking element (3d) located in the rear seat (3) is separated from said first connection element (1c). Then, the rear seat (3) is folded so that at least a part thereof comes closer to the front seat (2). Thus, the volume occupied by the rear seat (3) is added to the volume of the load area (4). If the rear seat (3) is folded in this way, the bulkhead (5) is also moved forward. For this, the lower part of said bulkhead (5) is separated from said floor (1b) and the second connection element (5d) located in the bulkhead (5) is connected to said locking element (3d). Here, since the locking element (3d) already provided in the rear seat (3) is used for changing the position of the bulkhead (5), there is no need to an external connection structure. Therefore, during the manufacturing of the motor vehicle (A), it is ensured that the manufacturing process is carried out with lower costs and in a straightforward manner since different connection structures are not needed. Here, also since said locking element (3d) is in the form of a component providing a reliable connection, it is ensured that the connection is carried out reliably in case of changing the position of the bulkhead (5).

In a preferred embodiment of the invention, said motor vehicle (A) comprises at least one ceiling connection element (6) enabling the bulkhead (5) to be connected to the ceiling (1a). In this embodiment, said ceiling connection element (6) comprises at least one fixation mechanism that enables it to be fixed to the ceiling (1a). Said fixation mechanism may comprise fasteners such as nuts/bolts. Here, said bulkhead (5) is connected to the ceiling connection element (6) in a rotatable manner, for example by means of an intermediate element such as a hinge. Thus, while changing the position of the lower part of the bulkhead (5), the upper part can also rotate relative to the ceiling.

In a preferred embodiment of the invention, said motor vehicle (A) comprises at least one floor connection element (7) enabling the bulkhead (5) to be connected to the floor (1b) and at least one connection slot (1d) located at said floor (1b), suitable for connecting the floor connection element (7). In this embodiment, said floor connection element (7) is preferably in the form of a spring pin. By compressing or pulling and tensioning said spring, it is ensured that the pin is moved in or out of said connection slot (1d). Thus, when it becomes necessary to change the position of the bulkhead (5), it is ensured that users can separate the floor connection element (7) from the floor (1b) in a practical and reliable manner.

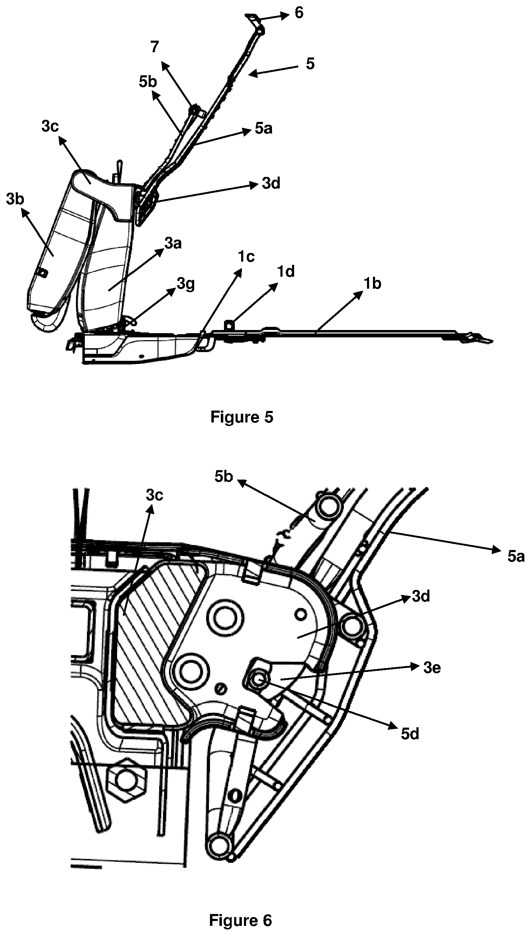

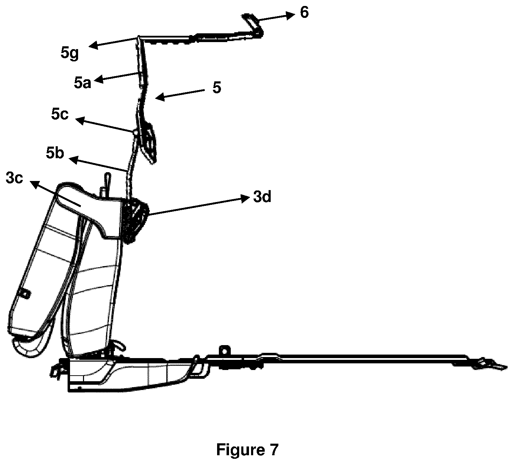

In another preferred embodiment of the present invention, said rear seat (3) comprises at least one sitting part (3a), at least one backing part (3b), at least one connection part (3c) in which said locking element (3d) is located, connecting the sitting part (3a) and the backing part (3b). The backing part (3b) mentioned herein is preferably connected to the connection part (3c) in a rotatable manner. Thus, as shown in figures 5 and 7, while the rear seat (3) is brought to a folded position, it is also ensured that the backing part (3b) is rotated and placed on the sitting part (3a). Said rear seat (3) also comprises at least one movable connection element (3g) located on a front side (on a side close to the front seat (2)) of the sitting part (3a), enabling the sitting part (3a) to be connected to the floor (1b) in a rotatable manner. Thanks to the movable connection element (3g), preferably in the form of a hinge, the rear seat (3) can be reliably folded by enabling the sitting part (3a) to rotate relative to the floor (1b).

In another preferred embodiment of the present invention, said bulkhead (5) comprises at least one first panel part (5a), at least one second panel part (5b) and at least one connection part (5c), preferably with a hinge structure, enabling the first panel part (5a) to be connected to the second panel part (5b) in a rotatable manner. In this embodiment, when it becomes necessary, said second panel part (5b) can be closed on the first panel part (5a) as a result of a rotational movement by means of the connection part (5c). In an exemplary embodiment, when the rear seat (3) is brought to a folded position, the second panel part (5b) is also folded on the first panel part (5a). In this case, for example, as shown in Figure 5, the first panel part (5a) is connected to the locking element (3d) by means of the second connection element (5d). In this embodiment, said second connection element (5d) may be in the form of a bar to be connected to the bulkhead (5) with a sole function of providing a connection, or at least a part of said connection part (5c) may be used as the second connection element (5d). In alternative embodiments, also a first side bar (5e) located in said first panel part (5a) (e.g., a frame of said first panel part (5a)) or a second side bar (5f) located in said second panel part (5b) (e.g., a frame of said second panel part (5b)) may be used as the second connection element (5d) and connected to the locking element (3d).

In another preferred embodiment of the present invention, said locking element (3d) comprises at least one lock slot (3e), at least one lock bolt (3f) located in the lock slot (3e) and at least one triggering element (not shown in the figures) controlling the movement of said lock bolt (3f). Here, after said first connection element (1c) or second connection element (5d) is placed in said lock slot (3e), their displacement from the lock slot (3e) is prevented by means of the lock bolt (3f). In order for the first connection element (1c) or the second connection element (5d) to get freed from the lock bolt (3f) and leave the lock slot (3e), the lock bolt (3f) must be moved by means of said triggering element. Thus, it is ensured that the locking element (3d) is in a reliable structure.

In another preferred embodiment of the present invention, said bulkhead (5) comprises at least one bending part (5g). Preferably, the bending part (5g) located in the first panel part (5a) may be in the form of a hinge or in the form of a pliable part such as a fabric. In the motor vehicle (A) developed with the present invention, when the rear seat (3) is brought to the folded position, the bulkhead (5) is still kept connected to the ceiling (1a) from its upper part. However, maintaining this connection causes the volume of the upper part of the load area (4) to not be increased sufficiently. In order to solve this problem, the bulkhead (5) is bent from said bending part (5g), as shown in Figure 7, and is connected to the locking element (3d) from a lower part thereof (e.g., from an end of the second panel part (5b) that is distal from the first panel part (5a)). Thus, the upper part of the folding rear seat (3) is also included in the load area (4) and the volume of the load area (4) is increased efficiently.

In the motor vehicle (A) developed with the present invention, the volume of the load area (4) behind the rear seat (3) can be increased by moving the rear seat (3) to the folded position. In this way, if the rear seat (3) is brought to the folded position, the bulkhead (5) separating the rear seat (3) and the load area (4) is disconnected from the floor (1b) and said bulkhead (5) is connected to the locking element (3d) located in the rear seat (3). Thus, the position of the bulkhead (5) can be changed in a practical and reliable manner according to the condition of the rear seat (3).

## Claims

1. A motor vehicle (A) comprising at least one body (G); at least one inner compartment (1) located in the body (G), having at least one ceiling (1a) and at least one floor (1b); at least one movement system located in the body (G); at least one front seat (2) located in the inner compartment (1); at least one rear seat (3) located behind said front seat (2) in the inner compartment (1), having at least one open and at least one folded position; at least one locking element (3d) located in said rear seat (3), connected to at least one first connection element (1c) located in said floor (1b) when the rear seat (3) is in the open position, enabling the rear seat (3) to be folded when separated from said first connection element (1c); at least one load area (4) located behind said rear seat (3) in the inner compartment (1), **characterized by** comprising
- at least one bulkhead (5) located between the load area (4) and the rear seat (3), suitable for being connected to said ceiling (1a) from at least one side thereof and to the floor (1b) from at least another side thereof;
- at least one second connection element (5d) located in said bulkhead (5), suitable for being connected to said locking element (3d) when the rear seat (3) is in the folded position.

2. The motor vehicle (A) according to claim 1, **characterized in that** said first connection element (1c) is in the form of a bar.

3. The motor vehicle (A) according to claim 1 or 2, **characterized in that** said second connection element (5d) is in the form of a bar.

4. The motor vehicle (A) according to any of the above claims, **characterized by** comprising at least one ceiling connection element (6) enabling the bulkhead (5) to be connected to the ceiling (1a).

5. The motor vehicle (A) according to claim 4, **characterized by** comprising at least one intermediate element enabling the bulkhead (5) to be connected to said ceiling connection element (6) in a rotatable manner.

6. The motor vehicle (A) according to any one of the above claims, **characterized by** comprising at least one floor connection element (7) enabling the bulkhead (5) to be connected to the floor (1b) and at least one connection slot (1d) located at said floor (1b), suitable for connecting the floor connection element (7).

7. The motor vehicle (A) according to claim 6, **characterized in that** said floor connection element (7) is a spring pin.

8. The motor vehicle (A) according to any one of the above claims, **characterized in that** the rear seat (3) comprises at least one sitting part (3a), at least one backing part (3b), at least one connection part (3c) in which said locking element (3d) is located, connecting the sitting part (3a) and the backing part (3b) to each other.

9. The motor vehicle (A) according to claim 8, **characterized in that** the rear seat (3) comprises at least one movable connection element (3g) located on a front side of the sitting part (3a), enabling the sitting part (3a) to be connected to the floor (1b) in a rotatable manner.

10. The motor vehicle (A) according to any one of the above claims, **characterized in that** the bulkhead (5) comprises at least one first panel part (5a), at least one second panel part (5b) and at least one connection part (5c) enabling the first panel part (5a) to be connected to the second panel part (5b) in a rotatable manner.

11. The motor vehicle (A) according to any one of the above claims, **characterized in that** the locking element (3d) comprises at least one lock slot (3e), at least one lock bolt (3f) located in the lock slot (3e) and at least one triggering element controlling the movement of said lock bolt (3f).

12. The motor vehicle (A) according to any one of the above claims, **characterized by** comprising at least one bending part (5g) of the bulkhead (5).

## Patentansprüche

1. Kraftfahrzeug (A), umfassend wenigstens eine Karosserie (G); wenigstens einen in der Karosserie (G) befindlichen, wenigstens eine Decke (1a) und wenigstens einen Boden (1b) aufweissenden Innenraum (1); wenigstens ein in der Karosserie (G) befindliches Bewegungssystem; wenigstens einen im Innenraum (1) befindlichen Vordersitz (2); wenigstens einen im Innenraum (1) hinter dem genannten Vordersitz (2) befindlichen, wenigstens eine Offen- und wenigstens eine Klappstellung aufweissenden Rücksitz (3); wenigstens ein im genannten Rücksitz (3) befindliches Verriegelungselement (3d), welches mit wenigstens einem im genannten Boden (1b) befindlichen ersten Verbindungselement (1c) verbunden ist, wenn sich der Rücksitz (3) in der Offenstellung befindet, und es ermöglicht, den Rücksitz (3) zu klappen, wenn es von dem genannten ersten Verbindungselement (1c) getrennt ist; wenigstens einen im Innenraum (1) hinter dem genannten Rücksitz (3) befindlichen Laderaum (4), **dadurch gekennzeichnet, dass** er
- wenigstens eine zwischen dem Laderaum (4) und dem Rücksitz (3) befindliche Trennwand (5) aufweisst, die geeignet ist, mit der genannten Decke (1a) von wenigstens einer ihrer Seiten und mit dem Boden (1b) von wenigstens einer anderen ihrer Seiten verbunden zu werden;
- wenigstens ein in der genannten Trennwand (5) befindliches zweites Verbindungselement (5d) aufweisst, das geeignet ist, mit dem genannten Verriegelungselement (3d) verbunden zu werden, wenn sich der Rücksitz (3) in der Klappstellung befindet;

2. Kraftfahrzeug (A) nach Anspruch 1, **dadurch gekennzeichnet, dass** das genannte erste Verbindungselement (1c) in Form einer Stange vorliegt.

3. Kraftfahrzeug (A) nach Anspruch 1 oder 2, **dadurch gekennzeichnet, dass** das genannte zweite Verbindungselement (5d) in Form einer Stange vorliegt.

4. Kraftfahrzeug (A) nach einem der vorhergehenden Ansprüche, **dadurch gekennzeichnet, dass** es wenigstens ein Deckenverbindungselement (6) umfasst, welches es ermöglicht, die Trennwand (5) mit der Decke (1a) zu verbinden.

5. Kraftfahrzeug (A) nach Anspruch 4, **dadurch gekennzeichnet, dass** es wenigstens ein Zwischenelement umfasst, welches es ermöglicht, die Trennwand (5) mit dem genannten Deckenverbindungselement (6) drehbar zu verbinden.

6. Kraftfahrzeug (A) nach einem der vorhergehenden Ansprüche, **dadurch gekennzeichnet, dass** es wenigstens ein Bodenverbindungselement (7), welches es ermöglicht, die Trennwand (5) mit dem Boden (1b) zu verbinden, und wenigstens einen an dem genannten Boden (1b) befindlichen Verbindungsschlitz (1d) umfasst, der geeignet ist, das Bodenverbindungselement (7) aufzunehmen.

7. Kraftfahrzeug (A) nach Anspruch 6, **dadurch gekennzeichnet, dass** das genannte Bodenverbindungselement (7) ein Federstift ist.

8. Kraftfahrzeug (A) nach einem der vorhergehenden Ansprüche, **dadurch gekennzeichnet, dass** der Rücksitz (3) wenigstens ein Sitzteil (3a), wenigstens ein Rückenteil (3b), sowie wenigstens ein Verbindungsteil (3c) umfasst, in dem sich das genannte Verriegelungselement (3d) befindet und welches das Sitzteil (3a) und das Rückenteil (3b) miteinander verbindet.

9. Kraftfahrzeug (A) nach Anspruch 8, **dadurch gekennzeichnet, dass** der Rücksitz (3) wenigstens ein an einer Vorderseite des Sitzteils (3a) befindliches bewegliches Verbindungselement (3g) umfasst, welches es ermöglicht, das Sitzteil (3a) mit dem Boden (1b) drehbar zu verbinden.

10. Kraftfahrzeug (A) nach einem der vorhergehenden Ansprüche, **dadurch gekennzeichnet, dass** die Trennwand (5) wenigstens ein erstes Paneelteil (5a), wenigstens ein zweites Paneelteil (5b), sowie wenigstens ein Verbindungsteil (5c) umfasst, welches es ermöglicht, das erste Paneelteil (5a) mit dem zweiten Paneelteil (5b) drehbar zu verbinden.

11. Kraftfahrzeug (A) nach einem der vorhergehenden Ansprüche, **dadurch gekennzeichnet, dass** das Verriegelungselement (3d) wenigstens einen Verriegelungsschlitz (3e), wenigstens einen im Verriegelungsschlitz (3e) befindlichen Verriegelungsbolzen (3f), sowie wenigstens ein die Bewegung des genannten Verriegelungsbolzens (3f) steuerndes Auslöseelement umfasst.

12. Kraftfahrzeug (A) nach einem der vorhergehenden Ansprüche, **dadurch gekennzeichnet, dass** es wenigstens einen Biegeabschnitt (5g) der Trennwand (5) umfasst.

## Revendications

1. Un véhicule automobile (A) comprenant au moins une carrosserie (G) ; au moins un habitacle (1) disposé dans la carrosserie (G), ayant au moins un plafond (1a) et au moins un plancher (1b) ; au moins un système de déplacement disposé dans la carrosserie (G) ; au moins un siège avant (2) disposé dans l'habitacle (1) ; au moins un siège arrière (3) disposé derrière ledit siège avant (2) dans l'habitacle (1), ayant au moins une position déployée et au moins une position repliée ; au moins un élément de verrouillage (3d) disposé dans ledit siège arrière (3), relié à au moins un premier élément de connexion (1c) disposé dans ledit plancher (1b) lorsque le siège arrière (3) est en position déployée, permettant au siège arrière (3) d'être replié lorsqu'il est séparé dudit premier élément de connexion (1c) ; au moins un espace de chargement (4) disposé derrière ledit siège arrière (3) dans l'habitacle (1), **caractérisé en ce qu'**il comprend :
- au moins une cloison (5) disposée entre l'espace de chargement (4) et le siège arrière (3), apte à être reliée audit plafond (1a) par au moins un côté de celle-ci et au plancher (1b) par au moins un autre côté de celle-ci ;
- au moins un second élément de connexion (5d) disposé dans ladite cloison (5), apte à être relié audit élément de verrouillage (3d) lorsque le siège arrière (3) est en position repliée.

2. Le véhicule automobile (A) selon la revendication 1, **caractérisé en ce que** ledit premier élément de connexion (1c) est sous la forme d'une barre.

3. Le véhicule automobile (A) selon la revendication 1 ou 2, **caractérisé en ce que** ledit second élément de connexion (5d) est sous la forme d'une barre.

4. Le véhicule automobile (A) selon l'une quelconque des revendications précédentes, **caractérisé en ce qu'**il comprend au moins un élément de connexion au plafond (6) permettant à la cloison (5) d'être reliée au plafond (1a).

5. Le véhicule automobile (A) selon la revendication 4, **caractérisé en ce qu'**il comprend au moins un élément intermédiaire permettant à la cloison (5) d'être reliée audit élément de connexion au plafond (6) de manière pivotante.

6. Le véhicule automobile (A) selon l'une quelconque des revendications précédentes, **caractérisé en ce qu'**il comprend au moins un élément de connexion au plancher (7) permettant à la cloison (5) d'être reliée au plancher (1b) et au moins une fente de connexion (1d) disposée dans ledit plancher (1b), apte à recevoir l'élément de connexion au plancher (7).

7. Le véhicule automobile (A) selon la revendication 6, **caractérisé en ce que** ledit élément de connexion au plancher (7) est une goupille à ressort.

8. Le véhicule automobile (A) selon l'une quelconque des revendications précédentes, **caractérisé en ce que** le siège arrière (3) comprend au moins une partie d'assise (3a), au moins une partie de dossier (3b), au moins une partie de connexion (3c) dans laquelle ledit élément de verrouillage (3d) est disposé, reliant la partie d'assise (3a) et la partie de dossier (3b) l'une à l'autre.

9. Le véhicule automobile (A) selon la revendication 8, **caractérisé en ce que** le siège arrière (3) comprend au moins un élément de connexion mobile (3g) disposé sur une face avant de la partie d'assise (3a), permettant à la partie d'assise (3a) d'être reliée au plancher (1b) de manière pivotante.

10. Le véhicule automobile (A) selon l'une quelconque des revendications précédentes, **caractérisé en ce que** la cloison (5) comprend au moins une première partie de panneau (5a), au moins une seconde partie de panneau (5b) et au moins une partie de connexion (5c) permettant à la première partie de panneau (5a) d'être reliée à la seconde partie de panneau (5b) de manière pivotante.

11. Le véhicule automobile (A) selon l'une quelconque des revendications précédentes, **caractérisé en ce que** l'élément de verrouillage (3d) comprend au moins une fente de verrouillage (3e), au moins un pêne de verrouillage (3f) disposé dans la fente de verrouillage (3e) et au moins un élément de déclenchement commandant le déplacement dudit pêne de verrouillage (3f).

12. Le véhicule automobile (A) selon l'une quelconque des revendications précédentes, **caractérisé en ce qu'**il comprend au moins une partie coudée (5g) de la cloison (5).
